# EUROPÄISCHE PATENTANMELDUNG

(11) **EP 2 109 043 A1**
(43) Veröffentlichungstag der Anmeldung: **14.10.2009**
(21) Anmeldenummer: 08007235.8
(22) Anmeldetag: 11.04.2008
(51) Int. Cl.: G06F 11/00

(54) **Vorrichtung und Verfahren zur Überwachung eines Präsentationssystems sowie Präsentationssystem**

(71) Anmelder: SP-Holding GmbH, 4521 Schiedlberg (AT)
(72) Erfinder: Höpfl, Johannes, 4040 Linz (AT)
(74) Vertreter: Buchenau, Thomas

(57) **Zusammenfassung**

Die Erfindung betrifft eine Vorrichtung und ein Verfahren zur Überwachung eines Präsentationssystems sowie ein Präsentationssystem, wobei der Erfindung die Aufgabe zugrunde liegt, eine Vorrichtung und ein Verfahren zur Überwachung eines Präsentationssystems sowie ein Präsentationssystem zur Verfügung zu stellen, mittels welchen die Ausfallzeiten reduzierbar sind. Eine erfindungsgemäße Vorrichtung zur Steuerung und Überwachung einer mittels eines Modems (108) erzeugten Datenverbindung (102) zwischen einer Wiedergabeeinheit (114) eines Präsentationssystems (100) und einem Serverrechner (104) umfasst:
a) einen ersten Anschluss für eine Wiedergabeeinheit (114),
b) einen zweiten Anschluss für ein Modem (108) sowie
c) eine Überwachungseinheit,
d) wobei die Überwachungseinheit eine Schnittstelle zur Ansteuerung durch eine Software aufweist, welche es ermöglicht, in Verbindung mit der Software den Funktionszustand des Modems zu prüfen und im Falle einer Fehlfunktion die Stromversorgung des Modems zu unterbrechen und wieder zu aktivieren.

## Beschreibung

Die Erfindung betrifft eine Vorrichtung und ein Verfahren zur Überwachung eines Präsentationssystems sowie ein Präsentationssystem.

Präsentationssysteme umfassen insbesondere eine Wiedergabeeinheit und eine Anzeigevorrichtung, wie z.B. einen Flachbildschirm. Solche Systeme werden beispielsweise in Geschäften oder an sonstigen öffentlichen Orten installiert, um Produkte, Dienstleistungen oder andere Informationen zu präsentieren. In Geschäften eingesetzte Präsentationssysteme werden auch als Instore-TV-Systeme bezeichnet.

Aus der Praxis sind Präsentationssysteme bekannt, die über ein Modem eine Datenverbindung zu einem zentralen Server aufbauen und welche mit Hilfe des zentralen Servers konfigurierbar sind. So können mehrere Präsentationssysteme von einem zentralen Ort aus verwaltet werden. Insbesondere können jederzeit neue Daten zu den Wiedergabegeräten übermittelt und der Ablauf von Präsentationen dynamisch angepasst werden.

Problematisch an den bekannten Systemen ist, dass die Verbindung zwischen den Präsentationssystemen und dem Serverrechner aufgrund von Systemabstürzen, Stromausfällen etc. häufig abreißen. Da die meisten dieser Verbindungsprobleme seitens der Präsentationssysteme auftreten, können diese nur durch personalintensive Reparaturarbeiten vor Ort behoben werden. Diese Reparaturarbeiten haben nicht nur hohe Personalkosten, sondern auch lange Ausfallzeiten des Präsentationssystems zur Folge.

Der Erfindung liegt die Aufgabe zugrunde, eine Vorrichtung und ein Verfahren zur Überwachung eines Präsentationssystems sowie ein Präsentationssystem zur Verfügung zu stellen, mittels welchen die Ausfallzeiten reduzierbar sind.

Die Lösung der Aufgabe erfolgt erfindungsgemäß mit den Merkmalen der Ansprüche 1, 6 bzw. 8.

Eine erfindungsgemäße Vorrichtung ist dazu geeignet, eine mittels eines Modems erzeugte Datenverbindung zwischen einer Wiedergabeeinheit eines Präsentationssystems und einem Serverrechner zu steuern und zu überwachen. Sie umfasst mindestens folgende Elemente:
a) einen ersten Anschluss für eine Wiedergabeeinheit,
b) einen zweiten Anschluss für ein Modem sowie
c) eine Überwachungseinheit,
d) wobei die Überwachungseinheit eine Schnittstelle zur Ansteuerung durch eine Software aufweist, welche es ermöglicht, in Verbindung mit der Software den Funktionszustand des Modems zu prüfen und im Falle einer Fehlfunktion die Stromversorgung des Modems zu unterbrechen und wieder zu aktivieren.

Die erfindungsgemäße Vorrichtung ermöglicht es somit, die Erreichbarkeit von mit dem (funktionsfähigen) Modem erreichbaren Endgeräten, beispielsweise die Erreichbarkeit eines zentralen Serverrechners, in Verbindung mit einer Software zu überprüfen. Die Software kann beispielsweise auf dem Präsentationssystem installiert sein. Die erfindungsgemäße Vorrichtung hat den Vorteil, dass sie Verbindungsprobleme, die auf das Modem zurückzuführen sind selbst erkennt und als aktiven Lösungsversuch eine Neuinitialisierung des Modems durchführt. So können auf das Modem zurückzuführende Verbindungsprobleme häufig automatisch und insbesondere ohne zeit- und kostenintensiven Personaleinsatz behoben werden.

In einer weiteren praktischen Ausführungsform ist die erfindungsgemäße Vorrichtung dazu ausgebildet, die Funktion der Wiedergabeeinheit zu prüfen und im Falle einer Fehlfunktion einen Neustart der Wiedergabeeinheit zu veranlassen. Dadurch werden auch auf die Wiedergabeeinheit zurückzuführende Verbindungsprobleme erfasst und zu beheben versucht. Dadurch wird der Nutzen einer erfindungsgemäßen Vorrichtung weiter gesteigert, da sich die Wahrscheinlichkeit, dass ein nicht funktionierendes Präsentationssystem sich ohne menschlichen Eingriff selbst "repariert", weiter erhöht.

Vorzugsweise sind der erste Anschluss und/oder der zweite Anschluss als "Universal Serial Bus"-Anschlüsse (USB-Anschlüsse) ausgeführt. Dies hat den Vorteil, dass die erfindungsgemäße Vorrichtung auf einfache Weise mit einer Vielzahl bekannter Präsentationssysteme kombinierbar ist. Darüber hinaus kann die erfindungsgemäße Vorrichtung dann auch besonders gut mit beliebigen anderen USB-Geräten kombiniert werden. Die erfindungsgemäße Vorrichtung kann beispielsweise zwischen einen PC und eine externe USB-Kamera geschaltet werden und die externe USB-Kamera nur dann mit Strom versorgen, wenn die Kamerafunktion benötigt wird.

Schon aus Platz- und Kostengründen ist es vorteilhaft, wenn die Überwachungseinheit einen Mikrocontroller mit einem nichtflüchtigen Speicher umfasst. Mikrocontroller sind nämlich sehr kompakt und zu niedrigen Kosten verfügbar. Ein weiterer Vorteil von Mikrocontrollern mit nicht flüchtigem Speicher ist, dass in diese implementierte Programme sehr stabil laufen und fehlerunanfällig sind.

In einer weiteren praktischen Ausführungsform weist die erfindungsgemäße Vorrichtung mindestens einen digitalen Anschluss (Ein-/Ausgang) für externe Geräte auf. Vorzugsweise handelt es sich auch dabei um USB-Anschlüsse. Es können jedoch auch andere Übertragungsstandards verwendet werden. Dann können an die Überwachungseinheit weitere Informationen übermittelt und diese Informationen zur Überwachung und Steuerung eingesetzt werden. So kann ein Präsentationssystem auf der Grundlage komplexer Informationen gesteuert werden. Beispielsweise können an den digitalen Anschluss eine Kamera oder ein Bewegungsmelder angeschlossen werden, welche den Bereich vor der Anzeigevorrichtung überwachen. Die Wiedergabe bestimmter Präsentationen kann dann in Abhängigkeit der von der Kamera bzw. dem Bewegungsmelder erfassten Information erfolgen. Beispielsweise kann eine Präsentation immer dann beginnen, wenn sich eine Person in Erfassungsbereich des Bewegungsmelders erfolgt oder wenn die Person sich in Richtung Kamera orientiert. Alternativ oder in Ergänzung dazu kann mit einer Kamera erfasst werden, ob die vor dem Präsentationssystem befindliche Person männlich oder weiblich ist und in Abhängigkeit des Geschlechts ein entsprechendes Präsentationsvideo ausgewählt werden.

Die Erfindung betrifft auch Präsentationssysteme umfassend eine der vorstehend beschriebenen erfindungsgemäßen Vorrichtungen. Dies gilt insbesondere für Präsentationssysteme mit einer Wiedergabeeinheit und einer Client-Server-Software zur Kommunikation mit einer entsprechenden Software auf einem zentralen Server. In Kombination mit solchen Präsentationssystemen ist es vorteilhaft, wenn die Überwachungseinheit der erfindungsgemäßen Vorrichtung eine Schnittstelle zum Ansprechen der Client-Server-Software des Präsentationssystems aufweist. In diesem Fall kann nämlich nicht nur die Verbindung zwischen der erfindungsgemäßen Vorrichtung und der Wiedergabeeinheit überprüft werden, sondern auch die Funktionsfähigkeit der Client-Server-Software. Sofern die Client-Server-Software nicht funktioniert, kann diese über die Schnittstelle der erfindungsgemäßen Vorrichtung neu gestartet werden.

Die Erfindung betrifft auch ein Verfahren zur Optimierung einer mittels eines Modems erzeugten Datenverbindung zwischen einer Wiedergabeeinheit eines Präsentationssystems und einem Serverrechner mittels einer zwischen der Wiedergabeeinheit und dem Modem installierten Vorrichtung, wobei die Vorrichtung in Verbindung mit einer Software folgende Verfahrensschritte durchführt:
a) Periodische Überprüfung, ob die Datenverbindung zwischen der Wiedergabeeinheit und dem Serverrechner besteht, und
b) falls keine Datenverbindung besteht oder das Modem nicht mehr reagiert, Neuinitialisierung des Modems.

In einer weiter bevorzugten Ausführungsform des erfindungsgemäßen Verfahrens werden im Anschluss oder parallel zu den vorherigen Verfahrensschritten folgende Verfahrensschritte durchgeführt:
- Periodische Überprüfung der Funktionsfähigkeit der Wiedergabeeinheit,
- falls die Wiedergabeeinheit nicht funktioniert, Neustarten der Wiedergabeeinheit.

Die Prüfung der Funktionsfähigkeit der Wiedergabeeinheit umfasst mindestens die Überprüfung, ob eine Datenverbindung zwischen der erfindungsgemäßen Vorrichtung und der Wiedergabeeinheit des Präsentationssystems besteht. Sofern das Präsentationssystem eine Client-Server-Software umfasst, kann die Prüfung optional auch eine Überprüfung umfassen, ob die Software gestartet und aktiv ist.

Wenn Fehler in Präsentationssystemen schnellstmöglich erkannt und behoben werden sollen, ist es sinnvoll, die Überprüfung der Datenverbindung zwischen der Wiedergabeeinheit und dem Serverrechner und die Überprüfung der Funktionsfähigkeit der Wiedergabeeinheit gleichzeitig durchzuführen.

In einer weiter bevorzugten Ausführungsform des erfindungsgemäßen Verfahrens wird von einem Serverrechner aus die Datenverbindung zu der Wiedergabeeinheit überprüft. Falls die Datenverbindung zur Wiedergabeeinheit über einen definierbaren Zeitraum nicht funktioniert, wird eine Fehlermeldung ausgegeben und dadurch dem Support des Servers unverzüglich ein Handlungsbedarf signalisiert. Dadurch werden vom System nicht selbst behebbare Fehler zeitnah erkannt und die Reaktionszeit des Supports reduziert.

Auf die Vorteile des Verfahrens, die bereits im Zusammenhang mit der erfindungsgemäßen Vorrichtung beschrieben wurden, wird hiermit verwiesen.

Weitere praktische Ausführungsformen sind in den Ausführungsbeispielen im Zusammenhang mit den Zeichnungen gezeigt. Es zeigt:

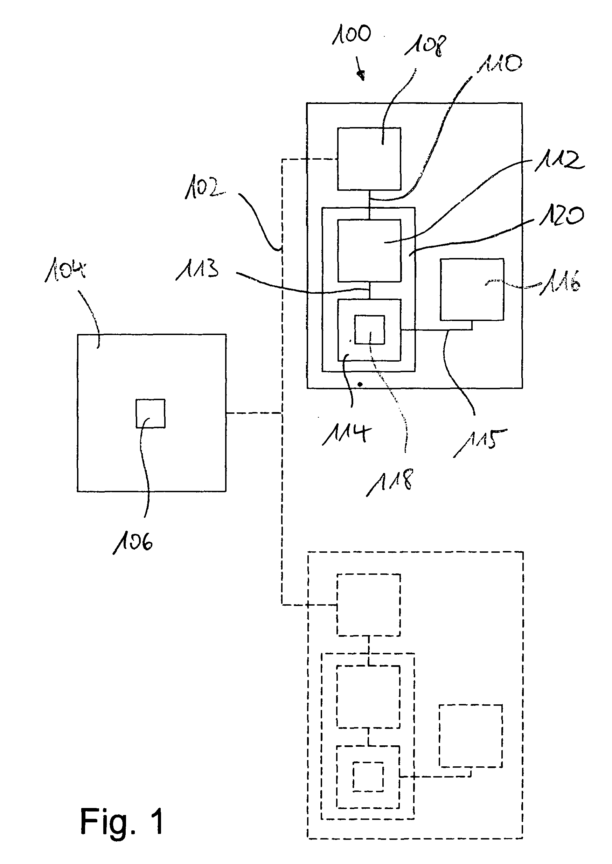

- Fig. 1: ein erfindungsgemäßes Präsentationssystem mit einem zentralen Serverrechner in einer schematischen Darstellung.

Figur 1 zeigt ein erfindungsgemäßes Präsentationssystem 100, welches über eine Datenverbindung 102 mit einem zentralen Serverrechner 104 in Verbindung steht. Die Datenverbindung 102 kann eine Funkverbindung, eine Internetverbindung oder einen sonstige Verbindung sein, die geeignet ist, Daten wechselseitig zwischen dem Serverrechner 104 und dem Präsentationssystem 100 auszutauschen.

Da die Erfindung sich im wesentlichen auf das Präsentationssystem 100 konzentriert, wurde als einziges Detail des Serverrechners 104 eine darauf installierte Serverkomponente 106 einer Client-Server-Software dargestellt. Alle übrigen Elemente des Servers sowie Peripheriegeräte, z.B. ein an den Server angeschlossenes Modem, wurden zur Vereinfachung weggelassen.

Das Präsentationssystem 100 umfasst ein Modem 108, welches den Datenaustausch über die Datenverbindung 102 ermöglicht. Das Modem 108 steht über ein USB-Kabel 110 mit dem USB-Hub (nicht gezeigt) einer erfindungsgemäßen Vorrichtung 112 in Verbindung. Die erfindungsgemäße Vorrichtung 112 wiederum steht über ein USB-Kabel 113 mit einer Wiedergabeeinheit 114 in Verbindung.

Die Wiedergabeeinheit dient insbesondere dazu, Präsentationen, Videos oder sonstige Informationen über eine Verbindungsleitung 115 zu einer Anzeigevorrichtung 116 zu übertragen und dort abzuspielen.

Im vorliegenden Ausführungsbeispiel ist die Anzeigevorrichtung ein Flachbildschirm.

Auf der Wiedergabeeinheit 114 ist eine Clientkomponente 118 einer Client-Server-Software installiert, welche mit der Serverkomponente 106 der Client-Server-Software des Serverrechners kommuniziert und eine Verwaltung der Wiedergabeeinheit 114 vom Serverrechner 104 aus ermöglicht. Mit Hilfe der Serverkomponente 106 der Client-Server-Software können vom Serverrechner aus:
- Dateien und Wiedergabelisten an die Wiedergabeeinheit übertragen und auf der Wiedergabeeinheit verwaltet werden,
- die Konfiguration der Wiedergabeeinheit überarbeitet werden, der Status der Wiedergabeeinheit abgefragt und in einen Bericht geschrieben werden,
- Inhalte zur Übertragung an die Wiedergabeeinheit umgewandelt und optimiert werden
- Prozesse auf den Wiedergabeeinheiten überwacht werden,
- neue Wiedergabeeinheiten aktiviert und defekte oder gestohlene Wiedergabeeinheiten deaktiviert werden und
- es kann überprüft werden, ob die Softwareversion der Clienteinheit dem aktuellen Stand entspricht und ggf. Updates, Korrekturen oder neue Versionen auf die Clienteinheit heruntergeladen werden müssen.

Unter Umwandlung und Optimierung von Inhalten wird insbesondere verstanden, dass der Serverrechner unter Berücksichtigung der Kapazität der Verbindungsleitung 102 sowie des Formats und der Größe der Anzeigevorrichtung Medienformate in qualitativ ansprechender Auflösung generiert, die in angemessener Zeit an die Wiedergabeeinheit übertragen werden können.

An der Wiedergabeeinheit selbst können mit Hilfe der Clientkomponente 114 der Client-Server-Software
- Wiedergabelisten und Daten vom Server heruntergeladen werden,
- auf der Wiedergabeeinheit vorhandene Daten abgespielt werden,
- der aktuellen Status an den Server übertragen werden,
- interne Prozesse und durchzuführende Aufgaben überwacht sowie Fehlerberichte erstellt und an den Server übermittelt werden,
- Anweisungen des Serverrechners 104 ausgeführt werden.

Ferner umfasst die Clientkomponente der Client-Server-Software einen Kopierschutz, der mit der erfindungsgemäßen Vorrichtung 112 zusammenwirkt.

Wie in Figur 1 gezeigt, können die erfindungsgemäße Vorrichtung 112 und die Wiedergabeeinheit 114 in ein gemeinsames Gehäuse 120 integriert werden.

Die erfindungsgemäße Vorrichtung wird über einen Mikrocontroller (nicht gezeigt) gesteuert, wobei im gezeigten Ausführungsbeispiel die Firmware des Mikrocontrollers in einem mit einem nichtflüchtigen Speicher, z.B. einem sogenannten Electrically Erasable Programmable Read-Only Memory (EEPROM), gespeichert ist.

An der erfindungsgemäßen Vorrichtung 112 angeordnete Leuchtdioden (nicht gezeigt) zeigen den aktuellen Status der Vorrichtung 112 und der Wiedergabeeinheit 114 an. Darüber hinaus weist die erfindungsgemäße Vorrichtung, welche als USB-Hub ausgeführt ist, einen USB-Eingang für die Verbindung zur Wiedergabeeinheit sowie zwei digitale Ein-/Ausgänge (nicht gezeigt) für weitere Peripheriegeräte, wie z.B. Kameras, Bewegungsmelder, Mikrofone etc., auf. Von den beiden USB Ein-/Ausgängen wird nur einer bei Einsatz eines USB-Modems belegt. Ein weiterer Ausgang ist als Schalter für die Ansteuerung externer Relais ausgeführt.

Die Stromversorgung der erfindungsgemäßen Vorrichtung 114 erfolgt über ein 5V-Netzteil (nicht gezeigt) des ATX-Standards. Dieses wird mit Strom versorgt, sobald die Wiedergabeeinheit 114 an das Stromnetz angeschlossen wird. Der Mikrocontroller lädt dann die Firmware aus dem EEPROM-Speicher und bootet.

Der Mikrocontroller entscheidet über Ein/Aus des ATX PWRON Signals. Nach einer einstellbaren Verzögerung wird das Signal automatisch gegeben. Dieses schaltet das ATX-Netzteil ein, wodurch die Wiedergabeeinheit 114 gestartet wird. Die Wiedergabeeinheit 114 muss innerhalb einer vorgegebenen Zeit der erfindungsgemäßen Vorrichtung 112 ein Bestätigungssignal liefern, dass die Clientkomponente 118 der Client-Server-Software gestartet wurde und läuft. Andernfalls wird die Wiedergabeeinheit 114 durch die erfindungsgemäße Vorrichtung 112 aus und wieder eingeschaltet. Diese Vorgänge werden für eine voreinstellbare Anzahl von Malen wiederholt. Wird dann noch immer nicht das Bestätigungssignal gegeben, geht die erfindungsgemäße Vorrichtung 112 davon aus, dass die Wiedergabeeinheit 114 defekt ist und schaltet diese ab. Die Serverkomponente der Client-Server-Software vermerkt die Fehlfunktion der Clientkomponente und leitet die Fehlermeldung an den Support.

Wenn die Wiedergabeeinheit 114 und die Clientkomponente der Client-Server-Software ordnungsgemäß laufen, wird die Hauptfunktion der erfindungsgemäßen Vorrichtung 112 aktiviert. Dieser verlangt von der Wiedergabeeinheit 114 eine regelmäßige Bestätigung, dass diese ordnungsgemäß läuft. Wenn diese Bestätigung nicht innerhalb eines vorgegebenen Zeitfensters erfolgt, schaltet die erfindungsgemäße Vorrichtung 112 die Wiedergabeeinheit 114 aus und wieder ein. Intern zeichnet die erfindungsgemäße Vorrichtung 112 wichtige Ereignisse, d.h. insbesondere veranlasste Aus- und Einschaltvorgänge, Reboot-Vorgänge etc., auf den EEPROM-Speicher auf. Diese Daten können von der Wiedergabevorrichtung 114 abgefragt und an den Server 104 übermittelt und dort gespeichert werden.

Bei dem Modem 108 handelt es sich im vorliegenden Ausführungsbeispiel um ein externes UMTS Modem. Die Clientkomponente 118 der Client-Server-Software überwacht die Stromversorgung des USB-Steckers von der erfindungsgemäßen Vorrichtung 112 zum Modem 108. Im Normalzustand ist die Stromversorgung aktiviert. Wenn das Modem 108 abstürzt oder aus anderen Gründen nicht mehr funktioniert, schaltet die erfindungsgemäße Vorrichtung 112 das Modem 108 aus und wieder ein, ohne die Wiedergabeeinheit 114 neu zu starten - auf der Anzeigeeinheit 116 läuft währenddessen die Wiedergabe der Inhalte unverändert weiter.

Wie im unteren Bereich von Figur 1 in gestrichelten Linien dargestellt, kann ein Serverrechner 104 auch mit einem oder mehreren weiteren Präsentationssystemen verbunden werden.

### Bezugszeichenliste

- 100: erfindungsgemäßes Präsentationssystem
- 102: Datenverbindung
- 104: Serverrechner
- 106: Serverkomponente einer Client-Server-Software
- 108: Modem
- 110: USB-Kabel
- 112: erfindungsgemäße Vorrichtung
- 113: USB-Kabel
- 114: Wiedergabeeinheit
- 115: Verbindungsleitung
- 116: Anzeigevorrichtung
- 118: Clientkomponente
- 120: Gehäuse

## Patentansprüche

1. Vorrichtung zur Steuerung und Überwachung einer mittels eines Modems (108) erzeugten Datenverbindung (102) zwischen einer Wiedergabeeinheit (114) eines Präsentationssystems (100) und einem Serverrechner (104) umfassend
a) einen ersten Anschluss für eine Wiedergabeeinheit (114),
b) einen zweiten Anschluss für ein Modem (108) sowie
c) eine Überwachungseinheit,
d) wobei die Überwachungseinheit eine Schnittstelle zur Ansteuerung durch eine Software aufweist, welche es ermöglicht, in Verbindung mit der Software den Funktionszustand des Modems zu prüfen und im Falle einer Fehlfunktion die Stromversorgung des Modems zu unterbrechen und wieder zu aktivieren.

2. Vorrichtung nach Anspruch 1, **dadurch gekennzeichnet, dass** die Überwachungseinheit dazu ausgebildet ist, die Funktion der Wiedergabeeinheit (114) zu prüfen und im Falle einer Fehlfunktion einen Neustart der Wiedergabeeinheit (114) zu veranlassen.

3. Vorrichtung nach einem der vorstehenden Ansprüche, **dadurch gekennzeichnet, dass** der erste Anschluss und/oder der zweite Anschluss "Universal Serial Bus"-Anschlüsse sind.

4. Vorrichtung nach einem der vorstehenden Ansprüche, **dadurch gekennzeichnet, dass** die Überwachungseinheit einen Mikrocontroller mit einem nichtflüchtigen Speicher umfasst.

5. Vorrichtung nach einem der vorstehenden Ansprüche, **dadurch gekennzeichnet, dass** mindestens ein digitaler Anschluss für externe Geräte vorgesehen ist.

6. Präsentationssystem umfassend eine Vorrichtung nach einem der vorstehenden Ansprüche.

7. Präsentationssystem nach Anspruch 6, umfassend eine Wiedergabeeinheit (114) und eine Client-Server-Software, **dadurch gekennzeichnet, dass** die Überwachungseinheit eine Schnittstelle zum Ansprechen der Client-Server-Software aufweist.

8. Verfahren zur Optimierung einer mittels eines Modems (108) erzeugten Datenverbindung (102) zwischen einer Wiedergabeeinheit eines Präsentationssystems und einem Serverrechner mittels einer zwischen der Wiedergabeeinheit und dem Modem installierten Vorrichtung, wobei die Vorrichtung in Verbindung mit einer Software folgende Verfahrensschritte durchführt:
a) Periodische Überprüfung, ob die Datenverbindung (102) zwischen der Wiedergabeeinheit und dem Serverrechner besteht,
b) falls das Modem keine Datenverbindung (102) aufbauen kann oder das Modem nicht mehr reagiert, Neuinitialisierung des Modems.

9. Verfahren nach Anspruch 8, **dadurch gekennzeichnet, dass** im Anschluss oder parallel zu den vorstehend genannten Verfahrensschritten folgende Verfahrensschritte durchgeführt werden:
- Periodische Überprüfung der Funktionsfähigkeit der Wiedergabeeinheit,
- falls die Wiedergabeeinheit nicht funktioniert, Neustarten der Wiedergabeeinheit.

10. Verfahren nach Anspruch 8 oder 9, **dadurch gekennzeichnet, dass** im Anschluss an die oder parallel zu den vorstehend genannten Verfahrensschritten von einem Serverrechner folgende Verfahrensschritte durchgeführt werden:
- Periodische Überprüfung der Datenverbindung (102) zur Wiedergabeeinheit,
- falls die Datenverbindung (102) zur Wiedergabeeinheit über einen vorgegebenen Zeitraum nicht existiert, Ausgabe einer Fehlermeldung.
